# EUROPÄISCHE PATENTSCHRIFT

(11) **EP 1 094 307 B1**
(45) Veröffentlichungstag und Bekanntmachung des Hinweises auf die Patenterteilung: **23.12.2009**
(21) Anmeldenummer: 00121095.4
(22) Anmeldetag: 28.09.2000
(51) Int. Cl.: G01F 15/06

(54) **Anschlussschaltung für ein Messgerät**
Termination circuit for a measuring device
Circuit de terminaison pour un dispositif de mesure

(30) Priorität: 04.10.1999 DE 19947698
(43) Veröffentlichungstag der Anmeldung: 25.04.2001
(73) Patentinhaber: KROHNE MESSTECHNIK GMBH & CO. KG, 47058 Duisburg (DE)
(72) Erfinder: Brockhaus, Helmut, Dr.-Ing., 46535 Dinslaken (DE)
(74) Vertreter: Gesthuysen, von Rohr & Eggert

(56) Entgegenhaltungen:
- DE-U- 29 823 315
- US-A- 4 123 940
- US-A- 4 158 765
- US-A- 5 585 760

## Beschreibung

Die Erfindung betrifft eine Anschlußschaltung für ein elektrische Leistung aufnehmendes Meßgerät, mit zwei eine Zweileiterschnittstelle bildenden Anschlüssen zum Anschließen einer zweiadrigen Leitung, über die einerseits das Meßgerät mit der elektrischen Leistung speisbar ist und über die andererseits ein Meßsignal von dem Meßgerät - z. B. an eine Auswerteschaltung - übertragbar ist.

Anschlußschaltungen mit einer Zweileiterschnittstelle sind typischerweise Bestandteil von herkömmlichen Meßgeräten, wie Schwebekörper-Durchflußmeßgeräten, Wirbelfrequenz-Durchflußmeßgeräten, Differenzdruck-Durchflußmeßgeräten und Temperatursensoren. Diesen genannten Meßgeräten ist gemeinsam, daß zur Erzeugung des physikalischen Meßeffektes, der dem Meßprinzip dieser Meßgeräte jeweils zugrunde liegt, dem Meßgerät keine Energie zugeführt werden muß. Bei diesen Meßgeräten wird somit eine elektrische Leitung nur zur Einspeisung der zur Erfassung des Meßeffektes erforderlichen elektrischen Leistung und zur Übertragung des Meßsignals benötigt. Die Übertragung des Meßsignals erfolgt dabei über die Zweileiterschnittstelle, wobei als Meßsignal typischerweise ein Strom im Bereich von 4 bis 20 mA verwendet wird.

Ein Meßgerät mit einer Zweileiterschnittstelle ist in der Gebrauchsmusterschrift DE 298 23 315 U offenbart.

Die Patentschrift US-A-4 123 940 offenbart ein Wirbeldurchflußmeßgerät mit zwei Zweileiterschnittstellen, die alternativ zur Übertragung der Meßsignale in analoger oder digitaler Form dienen. Ein gleichzeitiger Betrieb beider Schnittstellen ist durch diese Patentschrift nicht nahegelegt.

Bei diesen Meßgeräten kann mit geringen Spannungen bzw. Strömen und somit mit geringen elektrischen Leistungen gearbeitet werden. Im Hinblick auf einen gegebenenfalls erforderlichen Explosionsschutz kann hier mit der Zündschutzart "Eigensicherheit" gearbeitet werden. Die Zündschutzart "Eigensicherheit" beschreibt einen Explosionsschutz, der darauf beruht, daß selbst im Falle eines Kurzschlusses zwischen den beiden Adern der auf die Zweileiterschnittstelle führenden Leitung kein zündfähiger Funke entsteht. Ein solcher Explosionsschutz kann nur dadurch gewährleistet sein, daß die insgesamt verfügbare elektrische Leistung begrenzt ist.

Bei Meßgeräten, bei denen zur Erzielung des Meßeffektes elektrische Leistung aufgewendet werden muß, wie z. B. bei magnetisch-induktiven Durchflußmeßgeräten, Ultraschall-Durchflußmeßgeräten, Coriolis-Massendurchflußmeßgeräten und Radar-Füllstandsmeßgeräten, kann die Verwendung einer Zweileiterschnittstelle dann zu Problemen führen, wenn mit der Zündschutzart "Eigensicherheit" gearbeitet werden soll. Dann kann nur eine sehr begrenzte elektrische Leistung auf das Meßgerät übertragen werden. Wird der typische Signalstrombereich zwischen 4 und 20 mA verwendet, so stehen für die Stromversorgung nur 4 mA zur Verfügung. Dies führt dazu, daß bei Meßgeräten, bei denen für die Erzielung des physikalischen Meßeffektes dem Meßgerät Leistung zugeführt werden muß, wesentliche Nachteile im Meßbetrieb in Kauf genommen werden müssen. Insbesondere weisen solche Meßgeräte oft nur ein geringes Signal-zu-Rausch-Verhältnis auf und reagieren nur langsam auf Änderungen der Meßwerte, da aufgrund der geringen zugeführten Leistung Messungen nur in größeren Abständen durchgeführt werden können.

Dem zuvor aufgezeigten Problem konnte bisher dadurch in gewissem Maße begegnet werden, daß die elektronischen Bauelemente der Meßgeräte bezüglich der Leistungsaufnahme sowie des Signal-zu-Rausch-Verhältnisses verbessert worden sind. Daher ist ein Betrieb solcher Meßgeräte mit einer Zweileiterschnittstelle gegenwärtig grundsätzlich möglich, und entsprechende Geräte sind auch am Markt verfügbar. Diese Geräte sind jedoch in ihren Einsatzmöglichkeiten stark eingeschränkt, insbesondere auf Grund der angesprochenen Trägheit bei der Verfolgung der Meßwerte.

Das in Rede stehende Meßgerät soll vorzugsweise an "eigensichere Leitungen" angeschlossen werden. Dabei meint "eigensichere Leitungen" natürlich nicht, daß die Leitungen selbst "eigensicher" ausgeführt wären. Vielmehr meint "eigensichere Leitungen", daß diese entweder an eine eigensichere Stromquelle angeschlossen sind bzw. werden oder daß sie eingangsseitig durch eine entsprechende Schaltung, z. B. durch Dioden, "eigensicher gemacht sind".

Es ist nun die Aufgabe der Erfindung, eine Anschlußschaltung und ein Meßgerät mit einer solchen bereitzustellen derart, daß ein universeller Einsatz des Meßgeräts in unterschiedlichen, voneinander verschiedene Leistungsaufnahmen erfordernden Meßsituationen möglich ist.

Erfindungsgemäß ist die zuvor hergeleitete und aufgezeigte Aufgabe dadurch gelöst, daß bei einer gattungsgemäßen Anschlußschaltung wenigstens ein zusätzlicher Anschluß zum Anschließen einer zweiten Leitung vorgesehen ist und daß mit der zweiten Leitung das Meßgerät zusätzlich mit elektrischer Leistung speisbar ist , so daß das Meßgerät wahlweise entweder ausschließlich über die Zweileiterschnittstelle betreibbar ist, ohne daß an dem zusätzlichen Anschluß die zweite Leitung angeschlossen ist, oder gleichzeitig über die Zweileiterschnittstelle und den zusätzlichen Anschluß betreibbar ist, an dem die zweite Leitung angeschlossen ist, falls eine höhere Leistung erforderlich ist. Begrenzt ist diese zusätzliche, über die zweite Leitung einzuspeisende elektrische Leistung nur dadurch, daß dann, wenn mit der Zündschutzart "Eigensicherheit" gearbeitet wird, auch insoweit die Zündschutzart "Eigensicherheit" gewährleistet sein muß. Erfindungsgemäß kann somit je nach Art der Anwendung entweder nur eine Leitung verwendet werden oder aber, falls eine entsprechend höhere Leistung erforderlich ist, eine zweite Leitung zugeschaltet werden.

Die erfindungsgemäße Anschlußschaltung ist vorzugsweise dadurch weitergebildet, daß zwei Anschlüsse vorgesehen sind, die eine zweite Zweileiterschnittstelle zum Anschließen der zweiten, zweiadrig ausgebildeten Leitung bilden. Dies hat z. B. den Vorteil, daß die Anschlußschaltung nur eine Art von Anschlüssen aufweisen muß, nämlich z. B. ein bestimmtes Stecker-Buchsensystem für die Zweileiterschnittstellen. Somit ist eine gewisse Standardisierung des Anschlußsystems möglich.

Vorzugsweise ist dem Meßgerät ein Spannungsregler zugeordnet, auf dessen Eingang die beiden Zweileiterschnittstellen geführt sind.

Der Strom nach der ersten Zweileiterschnittstelle und/oder der Strom nach der zweiten Zweileiterschnittstelle können jeweils begrenzt, gesteuert oder geregelt sein. Zur Steuerung bzw. zur Regelung des Stroms nach der ersten Zweileiterschnittstelle bzw. des Stroms nach der zweiten Zweileiterschnittstelle ist vorzugsweise jeweils ein Längsregeltransistor vorgesehen, nämlich ein erster Längsregeltransistor nach der ersten Zweileiterschnittstelle und ein zweiter Längsregeltransistor nach der zweiten Zweileiterschnittstelle. Dabei erfolgt vorzugsweise die Ansteuerung des ersten Längsregeltransistors vom Spannungsregler oder vom Meßgerät und die Ansteuerung des zweiten Längsregeltransistors vorzugsweise von einer besonderen Steuerschaltung. Vorzugsweise wird der zweite Längsregeltransistor derart angesteuert, daß ein konstanter Strom zur Verfügung steht.

Zur Gleichrichtung einer Wechselspannung, die über die auf die erste Zweileiterschnittstelle führende Leitungen übertragen wird und/oder die über die auf die zweite Zweileiterschnittstelle führenden Leitung übertragen wird, ist vorzugsweise vorgesehen, daß direkt nach der ersten Zweileiterschnittstelle und/oder direkt nach der zweiten Zweileiterschnittstelle jeweils ein Gleichrichter nachgeschaltet ist. Ein solcher Gleichrichter ist vorzugsweise als Brückengleichrichter ausgebildet und kann bei einer Gleichspannung, die über die auf die erste Zweileiterschnittstelle führende Leitung bzw. über die auf die zweite Zweileiterschnittstelle führende Leitung geführt wird, auch als Verpolungsschutz verwendet werden. Die Gleichrichter sind weiterhin wesentliche Elemente, um den Rückfluß elektrischer Energie aus dem Meßgerät heraus auf die Zweileiterschnittstellen sicherheitstechnisch zu verhindern und so die Zündschutzart "Eigensicherheit" der "eigensicheren Leitungen" zu gewährleisten.

Ein Meßgerät mit der erfindungsgemäßen Anschlußschaltung ist vorzugsweise derart ausgebildet, daß die Anschlußschaltung in das Meßgerät integriert ist. Vorzugsweise sind dabei die Anschlüsse der Anschlußschaltung im Gehäuse des Meßgeräts integriert. Auf diese Weise können z. B. die Anschlußschaltung und das Meßgerät derart gekapselt werden, so daß sie der Zündschutzart "Erhöhte Sicherheit", "Vergußkapselung" oder "Druckfeste Kapselung" entsprechen.

Im Ergebnis führt die Erfindung also dazu, daß der Anwender das erfindungsgemäße Meßgerät entweder als 2-Leiter-Meßgerät oder als 4-Leiter-Meßgerät einsetzen kann.

Im einzelnen gibt es nun verschiedene Möglichkeiten, die erfindungsgemäße Anschlußschaltung und das erfindungsgemäße Meßgerät auszugestalten und weiterzubilden. Dazu wird verwiesen einerseits auf die dem Patentanspruch 1 nachgeordneten Patentansprüche, andererseits auf die Beschreibung bevorzugter Ausführungsbeispiele der Erfindung in Verbindung mit der Zeichnung. In der Zeichnung zeigt
- Fig. 1: schematisch eine Anschlußschaltung gemäß einem ersten bevorzugten Ausführungsbeispiel der Erfindung und
- Fig. 2: schematisch eine Anschlußschaltung gemäß einem zweiten bevorzugten Ausführungbeispiel der Erfindung.

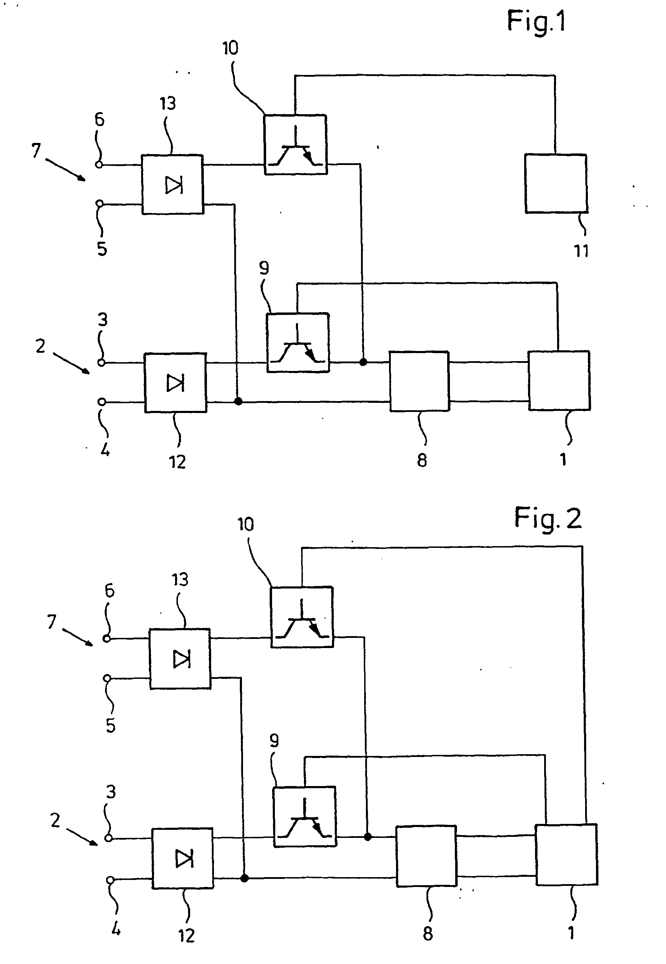

Aus Fig. 1 ist schematisch eine Anschlußschaltung gemäß einem ersten bevorzugten Ausführungsbeispiel der Erfindung für ein elektrische Leistung aufnehmendes Meßgerät 1 ersichtlich. Dabei weist die Anschlußschaltung eine erste Zweileiterschnittstelle 2 auf, die im wesentlichen aus zwei Anschlüssen 3, 4 besteht und über die einerseits dem Meßgerät 1 elektrische Leistung zuführbar ist und über die andererseits im Meßgerät 1 erzeugte Meßsignale übertragbar sind.

Zusätzlich zur ersten Zweileiterschnittstelle 2 sind ein Anschluß 5 und ein Anschluß 6 vorgesehen, die eine zweite Zweileiterschnittstelle 7 bilden. Die Verwendung dieser zweiten Zweileiterschnittstelle 7 ist optional und nur dann erforderlich, wenn dem Meßgerät 1 mehr Leistung zugeführt werden muß, als über eine auf die erste Zweileiterschnittstelle 2 führende Leitung möglich ist. Gemäß dem ersten bevorzugten Ausführungsbeispiel der Erfindung ist bei der zusätzlichen Verwendung der zweiten Zweileiterschnittstelle 7 die Zuführung von bis zu 400 mW zusätzlicher Leistung möglich.

Wie aus Fig. 1 ersichtlich, wird sowohl der der Anschlußschaltung über die erste Zweileiterschnittstelle 2 zugeführte Strom als auch der der Anschlußschaltung über die zweite Zweileiterschnittstelle 7 zugeführte Strom auf den Eingang eines Spannungsreglers 8 geführt, der dem Meßgerät 1 zugeordnet und diesem vorgeschaltet ist. Dabei ist der ersten Zweileiterschnittstelle 2 ein erster Längsregeltransistor 9 nachgeschaltet, und der zweiten Zweileiterschnittstelle 7 ist ein zweiter Längsregeltransistor 10 nachgeschaltet. Bei der Anschlußschaltung gemäß dem ersten bevorzugten Ausführungsbeispiel der Erfindung erfolgt damit eine Stromregelung des von der Zweileiterschnittstelle 2 her zugeführten Stroms durch den Längsregeltransistor 9, indem dieser von dem Meßgerät 1 angesteuert wird. Im Gegensatz dazu wird der von der Zweileiterschnittstelle 7 her zugeführte Strom mit Hilfe des Längsregeltransistors 10 gesteuert. Die Ansteuerung des Längsregeltransistors 10 erfolgt dabei über eine Steuerschaltung 11. Dabei ist mit Hilfe der den Längsregeltransistor 10 ansteuernden Steuerschaltung 11 ein fester, von der zweiten Zweileiterschnittstelle 7 auf den Eingang des Spannungsreglers 8 geführter Strom eingestellt.

Wie ferner aus Fig. 1 ersichtlich, ist der ersten Zweileiterschnittstelle 2 ein Brückengleichrichter 12 direkt nachgeschaltet, und der zweiten Zweileiterschnittstelle 7 ist ein Brückengleichrichter 13 direkt nachgeschaltet. Die Brückengleichrichter 12, 13 wirken als Gleichrichter, wenn über die auf die erste Zweileiterschnittstelle 2 führende Leitung bzw. über die auf die zweite Zweileiterschnittstelle 7 führende Leitung Wechselstrom geführt wird. Bei der Verwendung von Gleichstrom, d. h. wenn über die auf die erste Zweileiterschnittstelle 2 führende Leitung und über die auf die zweite Zweileiterschnittstelle 7 führende Leitung Gleichstrom geführt wird, dienen die Brückengleichrichter 12, 13 jeweils als Verpolungsschutz.

Aus Fig. 2 ist eine Anschlußschaltung gemäß einem zweiten bevorzugten Ausführungsbeispiel der Erfindung ersichtlich. Der Aufbau der aus Fig. 2 ersichtlichen Anschlußschaltung gemäß dem zweiten bevorzugten Ausführungsbeispiel der Erfindung weicht lediglich insofern von der in Fig. 1 gezeigten Anschlußschaltung ab, als daß der der zweiten Zweileiterschnittstelle 7 nachgeschaltete Längsregeltransistor 10 nicht von der Steuerschaltung 11, sondern von dem Meßgerät 1 angesteuert wird. Insofern erfolgt gemäß dem zweiten bevorzugten Ausführungsbeispiel der Erfindung sowohl für den ersten Längsregeltransistor 9 als auch für den zweiten Längsregeltransistor 10 eine Ansteuerung durch das Meßgerät 1, wobei jedoch bei diesen beiden Regelungen die Regelparameter voneinander verschieden sein können.

In den Fig. 1 und 2 nicht dargestellt ist, daß die Ansteuerschaltung gemäß den dargestellten und beschriebenen bevorzugten Ausführungsbeispielen der Erfindung in das Meßgerät 1 integriert sind. Dies bedeutet, daß die Ansteuerschaltung und das Meßgerät 1 eine Einheit bilden, so daß die Ansteuerschaltung und das Meßgerät 1 auch gemeinsam z. B. gekapselt werden können, um somit einen Explosionsschutz zu erzielen. Ferner ist in den Figuren nicht dargestellt, daß die Anschlüsse 3, 4 der ersten Zweileiterschnittstelle 2 sowie die Anschlüsse 5, 6 der zweiten Zweileiterschnittstelle 7 in das Gehäuse des Meßgeräts 1 integriert sind. Auf diese Weise sind die Anschlüsse 3, 4 und 5, 6 sicher und leicht zugänglich angebracht, und es ist einfach, die optionale Zuschaltung der zweiten Zweileiterschnittstelle 7 durchzuführen.

## Patentansprüche

1. Meßgerät, insbesondere magnetisch-induktives Durchflußmeßgerät, Ultraschall-Durclaflußmeßgerät, Coriolis-Massendurchflußmeßgerät oder Radar-Füllstandsmeßgerät, mit einer Anschlußschaltung, die zwei eine Zweileiterschnittstelle (2) bildende Anschlüsse (3, 4) zum Anschließen einer zweiadrigen Leitung aufweist, über die einerseits das Meßgerät (1) mit elektrischer Leistung speisbar ist und über die andererseits ein Meßsignal von dem Meßgerät (1) übertragbar ist, **dadurch gekennzeichnet, daß** wenigstens ein zusätzlicher Anschluß (5) zum Anschließen einer zweiten Leitung vorgesehen ist und daß das Meßgerät (1) mit der zweiten Leitung zusätzlich mit elektrischer Leistung speisbar ist, so daß das Meßgerät wahlweise entweder ausschließlich über die Zweileiterschnittstelle betreibbar ist, ohne daß an dem zusätzlichen Anschluß (3) die zweite Leitung angeschlossen ist, oder gleichzeitig über die Zweileiterschnittstelle und den zusätzlichen Anschluß betreibbar ist, an dem die zweite Leitung angeschlossen ist, falls eine höhere Leistung erforderlich ist.

2. Meßgerät nach Anspruch 1, **dadurch gekennzeichnet, daß** zwei Anschlüsse (5, 6) vorgesehen sind, die eine zweite Zweileiterschnittstelle (7) zum Anschließen einer zweiten, zweiadrig ausgebildeten Leitung bilden.

3. Meßgerät nach Anspruch 2, **dadurch gekennzeichnet, daß** ein dem Meßgerät (1) zugeordneter Spannungsregler (8) vorgesehen ist und die erste Zweileiterschnittstelle (2) und die zweite Zweileiterschnittstelle (7) auf den Eingang des Spannungsregler (8) geführt sind.

4. Meßgerät nach Anspruch 2 oder 3, **dadurch gekennzeichnet, daß** der Strom nach der ersten Zweileiterschnittstelle (2) und/oder der Strom nach der zweiten Zweileiterschnittstelle (7) begrenzt ist.

5. Meßgerät nach Anspruch 2 oder 3, **dadurch gekennzeichnet, daß** der Strom nach der ersten Zweileiterschnittstelle (2) mittels eines ersten, vom Spannungsregler (8) oder vom Meßgerät (1) angesteuerten Längsregeltransistors (9) - regelbar ist.

6. Meßgerät nach Anspruch 2 oder 3 oder nach Anspruch 5, **dadurch gekennzeichnet, daß** der Strom nach der zweiten Zweileiterschnittstelle (7) mittels eines zweiten, von einer Steuerschaltung (11) angesteuerten Längsregeltransistors (10) steuerbar ist.

7. Meßgerät nach Anspruch 3, **dadurch gekennzeichnet, daß** der Strom nach der zweiten Zweileiterschnittstelle (7) mittels eines zweiten, vom Spannungsregler (8) oder vom Meßgerät (1) angesteuerten Längsregeltransistors (10) regelbar ist.

8. Meßgerät nach einem der Ansprüche 2 bis 7, **dadurch gekennzeichnet, daß** der ersten Zweileiterschnittstelle (2) und/oder der zweiten Zweileiterschnittstelle (7) jeweils ein Gleichrichter nachgeschaltet ist.

9. Meßgerät nach einem der Ansprüche 1 bis 8, **dadurch gekennzeichnet, daß** das Meßgerät (1) in der Zündschutzart "Erhöhte Sicherheit", "Vergußkapselung" oder "Druckfeste Kapselung" ausgebildet ist.

## Claims

1. Measuring device, in particular an electromagnetic flowmeter, ultrasound flowmeter, Coriolis mass flowmeter or radar fill-level measuring device having an adapter circuit system with two ports (3, 4) constituting a two-wire interface (2) for connecting a dual connector cable by way of which it is possible to feed electric power to the measuring device (1) and also to transmit a measuring signal from the measuring device (1), **characterized in that** at least one additional port (5) is provided for connecting a second cable and that the second cable allows the feeding of additional electric power to the measuring device (1), so that the measuring device can optionally be operated only via the two-wire interface without the second cable being connected to the additional port (3) or, can be simultaneously operated via the two-wire interface and the additional port onto which the second cable is connected, should a higher capacity be required.

2. Measuring device according to claim 1, **characterized in that** two ports (5, 6) are provided, constituting a second two-wire interface (7) for connecting a second dual-conductor cable.

3. Measuring device according to claim 2, **characterized in that** a voltage regulator (8) assigned to the measuring device (1) is provided and the first two-wire interface (2) and the second two-wire interface (7) are lead to the input of the voltage regulator (8).

4. Measuring device according to claim 2 or 3, **characterized in that** the current emanating from the first two-wire interface (2) and/or the current emanating from the second two-wire interface (7) is limited.

5. Measuring device according to claim 2 or 3, **characterized in that** the current emanating from the first two-wire interface (2) can be regulated by means of a first linear regulating transistor (9) controlled by the voltage regulator (8) or by the measuring device (1).

6. Measuring device according to claim 2 or 3 or according to claim 5, **characterized in that** the current emanating from the second two-wire interface (7) can be regulated by means of a second linear regulating transistor (10) controlled by a control circuit (11).

7. Measuring device according to claim 3, **characterized in that** the current emanating from the second two-wire interface (7) can be regulated by means of a second linear regulating transistor (10) controlled by the voltage regulator (8) or by the measuring device (1).

8. Measuring device according to any one of claims 2 to 7, **characterized in that** a rectifier is connected in series respectively with the first two-wire interface (2) and/or the second two-wire interface (7).

9. Measuring device according to any one of claims 1 to 8, **characterized in that** the measuring device (1) is designed in accordance with the spark-protection standards relating to "enhanced safety", "potted encapsulation" or "pressure-resistant encapsulation".

## Revendications

1. Appareil de mesure, notamment débitmètre magnéto-inductif, débitmètre à ultrasons, débitmètre massique de Coriolis ou appareil de mesure de niveau à radar, comprenant un circuit de raccordement qui présente deux bornes (3, 4) formant une interface à deux conducteurs (2) pour raccorder un câble à deux conducteurs, par le biais duquel l'appareil de mesure (1) peut d'une part être alimenté en énergie électrique et par le biais de laquelle un signal de mesure peut d'autre part être transmis depuis l'appareil de mesure (1), **caractérisé en ce qu'**il est prévu au moins une borne supplémentaire (5) pour raccorder un deuxième câble et que l'appareil de mesure (1) peut en plus être alimenté avec de l'énergie électrique avec le deuxième câble, de sorte que l'appareil de mesure peut, au choix, être utilisé soit exclusivement par le biais de l'interface à deux conducteurs sans que le deuxième câble soit raccordé à la borne supplémentaire (3), soit il peut être utilisé simultanément par le biais de l'interface à deux conducteurs et de la borne supplémentaire à laquelle est raccordé le deuxième câble, si une puissance supérieure est nécessaire.

2. Appareil de mesure selon la revendication 1, **caractérisé en ce que** deux bornes (5, 6) sont prévues, lesquelles forment une deuxième interface à deux conducteurs (7) pour raccorder un deuxième câble réalisé avec deux conducteurs.

3. Appareil de mesure selon la revendication 2, **caractérisé en ce qu'**il est prévu un régulateur de tension (8) associé à l'appareil de mesure (1) et la première interface à deux conducteurs (2) ainsi que la deuxième interface à deux conducteurs (7) sont acheminées à l'entrée du régulateur de tension (8).

4. Appareil de mesure selon la revendication 2 ou 3, **caractérisé en ce que** le courant vers la première interface à deux conducteurs (2) et/ou le courant vers la deuxième interface à deux conducteurs (7) est limité.

5. Appareil de mesure selon la revendication 2 ou 3, **caractérisé en ce que** le courant vers la première interface à deux conducteurs (2) peut être régulé au moyen d'un premier transistor de régulation série (9) commandé par le régulateur de tension (8) ou par l'appareil de mesure (1).

6. Appareil de mesure selon la revendication 2 ou 3 ou selon la revendication 5, **caractérisé en ce que** le courant vers la deuxième interface à deux conducteurs (7) peut être commandé au moyen d'un deuxième transistor de régulation série (10) commandé par un circuit de commande (11).

7. Appareil de mesure selon la revendication 3, **caractérisé en ce que** le courant vers la deuxième interface à deux conducteurs (7) peut être commandé au moyen d'un deuxième transistor de régulation série (10) commandé par le régulateur de tension (8) ou par l'appareil de mesure (1).

8. Appareil de mesure selon l'une des revendications 2 à 7, **caractérisé en ce qu'**un redresseur est à chaque fois branché après la première interface à deux conducteurs (2) et/ou la deuxième interface à deux conducteurs (7).

9. Appareil de mesure selon l'une des revendications 1 à 8, **caractérisé en ce que** l'appareil de mesure (1) est réalisé dans la classe de protection contre l'explosion « Sécurité augmentée », « Enveloppe scellée » ou « Enveloppe antidéflagrante ».
